# EUROPÄISCHE PATENTSCHRIFT

(11) **EP 4 159 536 B1**
(45) Veröffentlichungstag und Bekanntmachung des Hinweises auf die Patenterteilung: **04.03.2026**
(21) Anmeldenummer: 22190214.1
(22) Anmeldetag: 12.08.2022
(51) Int. Cl.: B60N 2/56, B60N 2/64

(54) **FORMTEIL**
MOULDED PART
PIÈCE MOULÉE

(30) Priorität: 28.09.2021 DE 102021210806
(43) Veröffentlichungstag der Anmeldung: 05.04.2023
(73) Patentinhaber: Benecke-Kaliko AG, 30419 Hannover (DE)
(72) Erfinder: Dr. Nassauer, Benjamin, 30165 Hannover (DE); Mikulski, Sebastian, 30165 Hannover (DE)
(74) Vertreter: Preusser, Andrea

(56) Entgegenhaltungen:
- EP-A1- 1 894 493
- EP-B1- 2 457 411
- WO-A1-2011/058077
- US-A1- 2019 208 580

## Beschreibung

Die Erfindung betrifft ein Formteil, umfassend eine elektrisch leitende Funktionsschicht, mindestens zwei mit der elektrisch leitenden Funktionsschicht verbundene, voneinander beabstandete Elektroden zum Einspeisen von elektrischem Strom in die Funktionsschicht und einen Bauteilträger aus Kunststoffmaterial, auf den die Funktionsschicht aufgebracht ist.

Formteile der eingangs genannten Art sind bekannt und werden beispielsweise in Kraftfahrzeugsitzen sowie Interieurbauteilen von Kraftfahrzeugen verwendet. Die elektrisch leitende Funktionsschicht wird häufig als Heizelement, zum Beispiel für Sitzheizungen oder beheizte Armlehnen verwendet, die aus einem derartigen Formteil gebildet sind oder ein solches umfassen. Daneben sind auch Anwendungen der elektrisch leitenden Funktionsschicht z.B. als Antenne oder als Sensor bekannt.

Zur Kontaktierung und Einspeisung von elektrischem Strom in die Funktionsschicht werden in der Regel Crimpverbinder eingesetzt, die die Leiterbahnen der Funktionsschicht mit mindestens zwei entsprechenden, voneinander beabstandete Elektroden verbinden. Daneben sind auch Druckknöpfe, leitfähige Kleber sowie Verbinder, die mit Federkraft eine Kontaktierung herstellen, als Mittel zur Kontaktierung und Einspeisung von elektrischem Strom bekannt. Beispielsweise offenbart die EP 2 457 411 B1 eine elektrisch leitende Funktionsschicht, die mit Federklammern eine solche Kontaktierung bewirkt. Die Dokumente US2019/208580A1 und EP1894493A1 zeigen ein Formteil gemäss des Oberbegriffs des Anspruchs 1.

Die bekannten Kontaktierungsvarianten bedingen einen hohen Montageaufwand sowie hohe Kosten. Darüber hinaus erweist sich deren mechanische Beständigkeit als verbesserungswürdig.

Aufgabe der Erfindung ist es, ein Formteil der eingangs genannten Art vorzuschlagen, bei welchem eine dauerhafte Verbindung der Funktionsschicht mit den Elektroden zu geringen Kosten und mit geringem Fertigungsaufwand erreichbar ist. Dabei soll auch die Möglichkeit der Übertragung größerer Ströme von mehreren Ampere problemlos möglich sein, wie sie beispielsweise bei Heizanwendungen gängig sind. Darüber hinaus soll das Formteil für typische Bauteile insbesondere im automobilen Umfeld, zum Beispiel Armauflagen, Verkleidungsbauteile besonders geeignet sein.

Gelöst wird diese Aufgabe durch die Merkmale des Hauptanspruches. Weitere vorteilhafte Ausgestaltungen sind in den Unteransprüchen offenbart. Ebenfalls offenbart ist ein Fahrzeugsitzbauteil, Automobilinnenraumteil, Möbelbauteil oder Bauteil eines Sportgeräts mit oder aus einem solchen Formteil.

Es ist vorgesehen, dass die Elektroden im erfindungsgemäßen Formteil in die an die Funktionsschicht angrenzende Oberfläche des Bauteilträgers integriert und mit der Funktionsschicht in einem Kontaktierungsbereich elektrisch kontaktiert sind. Die Elektroden können dabei beispielsweise als Metallstreifen oder Metallfolie ausgebildet sein und werden über bekannte Verfahren, zum Beispiel Löten oder Crimpen mit den stromführenden Anschlusskabeln verbunden.

Nach einem Vorschlag der Erfindung werden die Elektroden von dem Bauteilträger bei dessen Herstellung hinterspritzt oder hinterschäumt, wozu die Elektroden bei Herstellung des erfindungsgemäßen Formteiles in das entsprechende Spritzguss- oder Schäumwerkzeug an der vorgesehenen Position eingelegt und anschließend mit dem Kunststoff zur Ausbildung des Bauteilträgers hinterspritzt oder hinterschäumt werden. Im Ergebnis wird eine integrale Ausbildung des Bauteilträgers mit den in die Oberfläche integrierten Elektroden erhalten.

Nach einem alternativen Vorschlag der Erfindung werden die Elektroden auf die Oberfläche des zuvor bereits hergestellten Bauteilträgers haftfest aufgebracht, zum Beispiel aufgeklebt, was ebenfalls zu einer Integration derselben im Bauteilträger führt.

Nach einem weiteren Vorschlag der Erfindung können die Elektroden auch in entsprechenden Ausnehmungen des Bauteilträgers integriert angeordnet sein, entweder durch eine formschlüssige Verbindung oder indem die Elektroden in einer solchen Ausnehmung unter Hinzunahme eines Klebstoffes eingeklebt werden. In diesen Fällen wird die Formgebung des Bauteilträgers so ausgestaltet, dass dieser an seiner Oberfläche mit entsprechenden Ausnehmungen für die Aufnahme der Elektroden ausgerüstet ist, die die entsprechende Ausnehmung vorzugsweise vollständig auffüllen.

Die elektrisch leitende Funktionsschicht kann beispielsweise eine gedruckte Funktionsschicht sein, wie sie beispielsweise durch Bedrucken eines geeigneten elektrisch nichtleitenden Trägers, zum Beispiel auf Basis eines Textils oder einer Kunststofffolie mit einer elektrisch leitfähigen Paste erhalten werden kann. Die elektrisch leitende Funktionsschicht wird derart auf den mit den Elektroden ausgerüsteten Bauteilträger aufgebracht, dass die für die Belegung mit der Funktionsschicht vorgesehene Oberfläche des Bauteilträgers mit der Funktionsschicht bedeckt wird, wobei in einem vorgesehenen Kontaktierungsbereich der Funktionsschicht diese von den Elektroden elektrisch kontaktiert wird, d. h. der Kontaktierungsbereich der Funktionsschicht kommt auf den Elektroden zum Liegen.

Zur Verbesserung der Kontaktierung und auch zur Erhöhung der Korrosionsbeständigkeit der Elektroden können diese mit geeigneten Materialien beschichtet werden oder oberflächenbehandelt ausgeführt sein und/oder es können sonstige geeignete leitfähige Klebstoffe o. ä. Kontaktvermittler zusätzlich zum Einsatz kommen.

Bevorzugt werden die Elektroden in einem solchen Bereich des Bauteilträgers angeordnet, an dem eine hohe Flächenerpressung zur aufgebrachten elektrisch leitenden Funktionsschicht vorherrscht, beispielsweise an Randbereichen oder Kanten des erfindungsgemäßen Formteiles.

Zur weiteren Verbesserung der Positionierung und Flächenpressung über die gesamte Produktlebensdauer des erfindungsgemäßen Formteiles kann es darüber hinaus vorgesehen sein, dass im Kontaktierungsbereich zwischen Elektroden und Funktionsfolie mindestens eine Befestigungsklammer eingebracht ist, die die jeweilige Elektrode und die darauf positionierte Funktionsschicht durchdringt und lagegenau aneinander fixiert. Die Befestigungsklammer kann beispielsweise U-förmig ausgebildet sein, wie es auch von üblichen Heftklammern bekannt ist.

Nach einem weiteren Vorschlag der Erfindung sind die Befestigungsklammer aus nichtleitendem oder elektrisch isoliertem Material gebildet oder die Befestigungsklammern sind aus elektrisch leitendem Material gebildet, wobei der freiliegende Bereich derselben elektrisch isoliert ist.

Neben der Herstellung der Befestigungsklammern aus nichtleitendem Material, beispielsweise geeigneten Kunststoffen, können diese auch aus leitfähigem Material hergestellt und zumindest an ihrer Oberfläche mit einem elektrisch isolierenden Material überzogen oder beschichtet sein. Darüber hinaus kann auch vorgesehen sein, Befestigungsklammern aus elektrisch leitendem Material zu verwenden, die anschließend mit einer geeigneten Isolierung überzogen oder überklebt werden, z.B. mittels geeigneter Lacke oder Klebebänder.

In einer weiteren Ausgestaltung des erfindungsgemäßen Formteiles ist vorgesehen, dass auf der dem Bauteilträger abgewandten Oberfläche der Funktionsschicht ein Decksubstrat aufgebracht ist, welches beispielsweise von einem ein- oder mehrschichtigen Kunstleder, einem Leder oder Textil gebildet ist. Dieses Decksubstrat wird unter Überdeckung der Funktionsschicht auf den Bauteilträger aufgebracht und bildet somit die sichtseitige Oberfläche des erfindungsgemäßen Formteiles. Die elektrisch leitende Funktionsschicht wird somit unmittelbar unter dem Decksubstrat angeordnet, was beispielsweise für Heizanwendungen oder zur Ausbildung von Sensoren vorteilhaft ist.

Ebenso ist es möglich, dass zunächst die Funktionsschicht auf die Rückseite des Decksubstrats kaschiert wird und anschließend dieser Gesamtaufbau auf den Bauteilträger aufgebracht wird.

Erfindungsgemäss ist es vorgesehen, dass zwischen dem Bauteilträger und der Funktionsschicht außerhalb der Kontaktierungsbereiche, beispielsweise zwischen den Kontaktierungsbereichen der verwendeten Elektroden eine Kunststoff-Schaumschicht vorgesehen ist, um dem Formteil beispielsweise eine weiche, elastisch nachgiebige Haptik zu verleihen. Eine solche Kunststoff-Schaumschicht kann insbesondere bei Formteilen vorgesehen sein, die mit einem zusätzlichen Decksubstrat an der dem Bauteilträger abgewandten Oberfläche ausgebildet sind. Die Funktionsschicht verläuft in diesem Falle vorteilhaft zwischen der Kunststoff-Schaumschicht und dem Decksubstrat.

Das vorangehend erläuterte erfindungsgemäße Formteil kann mit nur geringfügig abgewandeltem Aufwand gegenüber bekannten Formteilen, die ohne elektrisch leitende Funktionsschicht ausgebildet sind, hergestellt und montiert werden. Das erfindungsgemäße Formteil mit elektrisch leitender Funktionsschicht ist von daher industriell besonders gut herstellbar, wobei die zusätzlichen Kosten sehr gering ausfallen, da die zur Ausbildung der Elektroden benötigten Metallstreifen oder Metallfolien sehr preiswert hergestellt werden können und anschließend in den üblichen Herstellungsvorgang zur Herstellung der Formteile integriert werden.

Mit dem erfindungsgemäßen Formteil können beispielsweise Fahrzeugsitzbauteile, Automobilinnenraumteile, Möbelbauteile oder Bauteile eines Sportgerätes hergestellt werden. Beispiele umfassen Pkw-Sitze, Anbauteile im Pkw-Interieur, Sitze und Interieurbauteile von Luftfahrzeugen, Schiffen und öffentlichen Verkehrsmitteln und öffentlichen Einrichtungen, Polstermöbel, medizinische Einrichtungen, wie Massageliegen, Sportgeräte und Fahrrad- oder Motorrad-Sitze oder -Griffe.

Weitere Einzelheiten des erfindungsgemäßen Formteiles werden nachfolgend anhand von zwei Ausführungsbeispielen in der Zeichnung schematisch erläutert. Es zeigen:
- Figur 1: eine erste Ausführungsform eines nicht beanspruchten Formteiles im Querschnitt;
- Figur 2: eine zweite Ausführungsform eines erfindungsgemäßen Formteiles im Querschnitt.

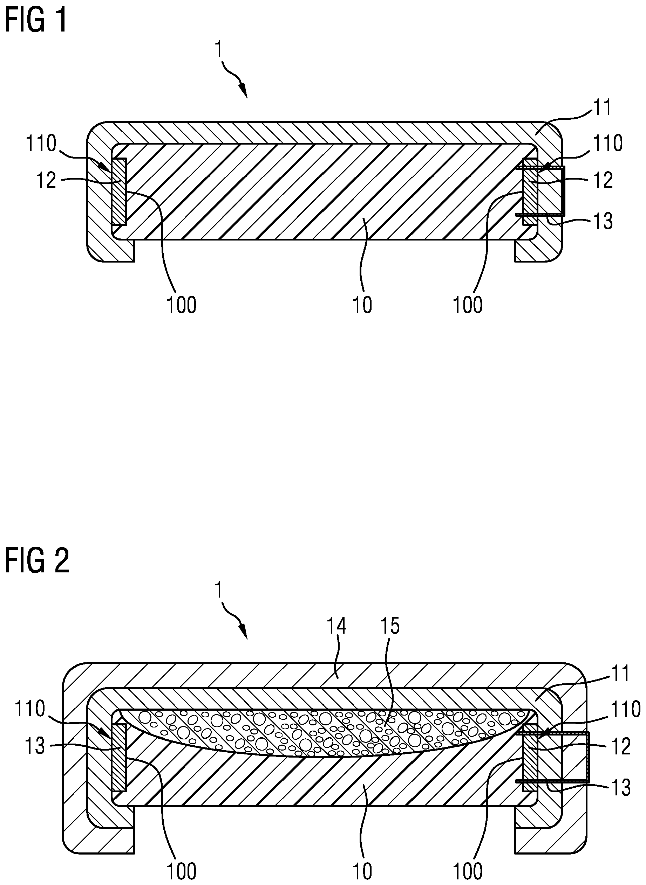

Aus der Figur 1 ist in einer schematischen Querschnittsdarstellung der Aufbau eines Formteiles 1 ersichtlich. Das Formteil 1 umfasst einen nach Art eines inneren Kerns ausgebildeten Bauteilträger 10, der entlang eines Großteils seiner Aussenoberfläche von einer elektrisch leitenden Funktionsschicht 11 eingehüllt ist, die auf die entsprechende Oberfläche des Bauteilträgers 10 aufgebracht ist und in nicht näher dargestellter Weise über Leiterbahnen verfügt, die beispielsweise bei Beaufschlagung mit einem elektrischen Strom elektrisch leiten und der Funktionsschicht 11 die Funktion einer Heizung verleihen, wenn sich die Funktionsschicht 11 infolge des Stromdurchflusses durch die Leiterbahnen erwärmt. Ein typisches Anwendungsbeispiel ist eine beheizte Armlehne in einem Kraftfahrzeug.

Zum Einspeisen des elektrischen Stroms in die Funktionsschicht 11 sind zwei voneinander beabstandete, an gegenüberliegenden Seiten des Bauteilträgers 10 angeordnete Elektroden 12 vorgesehen, die beispielsweise aus geeigneten Metallstreifen hergestellt sind und in nicht dargestellter Weise mit Anschlussleitungen verbunden, zum Beispiel verlötet sind.

Die Elektroden 12 befinden sich integriert in entsprechenden Ausnehmungen 100 des Bauteilträgers 10 und füllen diese vollständig auf. Eine solche Integration der Elektroden 12 in den Bauteilträger 10 kann beispielsweise dadurch erreicht werden, dass die Elektroden 12 bei Herstellung des Bauteilträgers 10 im Kunststoff-Spritzgussverfahren in die verwendete Spritzgussform eingelegt und anschließend mit dem Kunststoffmaterial zur Ausbildung des Bauteilträgers 10 hinterspritzt werden. Im Ergebnis wird somit ein Bauteilträger 10 mit integrierten Elektroden 12 erhalten.

Anschließend wird die elektrisch leitende Funktionsschicht 11 in der dargestellten Weise auf den mit den Elektroden 12 versehenen Bauteilträger 10 aufgebracht, wobei die Funktionsschicht 11 in einem vorgesehenen Kontaktierungsbereich 110 mit den Elektroden 12 in Kontakt kommt und insoweit elektrisch kontaktiert wird. Zusätzlich kann mindestens eine U-förmig ausgebildete Befestigungsklammer 13 zum Beispiel aus einem elektrisch nicht leitenden Kunststoffmaterial im Kontaktierungsbereich 110 durch die Funktionsschicht 11 und die Elektrode hindurch bis in den Bauteilträger 10 eingebracht werden, um die Position der Funktionsschicht 11 in Bezug auf die Elektroden und die Kontaktierung derselben dauerhaft zu sichern.

Im erfindungsgemässen Beispiel gemäß Figur 2 ist eine gegenüber dem nicht beanspruchten Beispiel in Figur 1 abgewandelte Ausgestaltung eines solchen Formteiles 1 ersichtlich, bei der gleiche Teile gleiche Bezugszeichen erhalten haben und zur Vermeidung von Wiederholungen nicht nochmals erläutert werden.

Man erkennt jedoch, dass zusätzlich zum Beispiel gemäß Figur 1 auf die auf den Bauteilträger 10 aufgebrachte elektrisch leitende Funktionsschicht 11 ein die Sichtseite bildendes Decksubstrat 14, beispielsweise ein ein- oder mehrschichtiges Kunstleder aufgebracht ist, welches die dem Bauteilträger 10 abgewandte Oberfläche der Funktionsschicht 11 einhüllt, sodass die Funktionsschicht 11 unmittelbar unter dem Decksubstrat 14 zum Liegen kommt.

Darüber hinaus ist zwischen dem Bauteilträger 10 und der Funktionsschicht 11 außerhalb der Kontaktierungsbereiche 110, d. h. hier zwischen den beiden Elektroden 12 bereichsweise eine Kunststoff-Schaumschicht 15 vorgesehen, die beispielsweise in eine entsprechende Vertiefung im Bauteilträger 10 eingebracht ist, sodass sie zwischen dem Bauteilträger 10 und der elektrisch leitenden Funktionsschicht 11 angeordnet wird. Hierzu kann die Kunststoff-Schaumschicht 15 beispielsweise am Bauteilträger 10 und/oder der Funktionsschicht 11 durch Kleben angebracht sein. Diese Kunststoffschaumschicht 15 verleiht dem Formteil eine elastische Nachgiebigkeit, die beispielsweise bei Anwendung als Armlehne besonders gewünscht wird.

Auch bei dieser Ausgestaltung verläuft die elektrisch leitende Funktionsschicht unmittelbar unterhalb des Decksubstrats 14 und kann beispielsweise bei Verwendung als Heizelement seine Heizenergie optimal an die Oberfläche des Decksubstrats 14 abgeben.

### Bezugszeichenliste:

- 1: Formteil
- 10: Bauteilträger
- 11: Funktionsschicht
- 12: Elektrode
- 13: Befestigungsklammer
- 14: Decksubstrat
- 15: Kunststoff-Schaumschicht
- 100: Ausnehmung
- 110: Kontaktierungsbereich

## Patentansprüche

1. Formteil (1), umfassend
eine elektrisch leitende Funktionsschicht (11),
mindestens zwei mit der elektrisch leitenden Funktionsschicht (11) verbundene, voneinander beabstandete Elektroden (12) zum Einspeisen von elektrischem Strom in die Funktionsschicht (11) und
einen Bauteilträger (10) aus Kunststoffmaterial, auf den die Funktionsschicht (11) aufgebracht ist,
wobei die Elektroden (12) in die an die Funktionsschicht (11) angrenzende Oberfläche des Bauteilträgers (10) integriert und mit der Funktionsschicht in einem Kontaktierungsbereich (110) elektrisch kontaktiert sind,
**dadurch gekennzeichnet, dass**
zwischen dem Bauteilträger (10) und der Funktionsschicht (11) außerhalb der Kontaktierungsbereiche (110) derselben eine Kunststoff-Schaumschicht (15) vorgesehen ist.

2. Formteil (1) nach Anspruch 1, **dadurch gekennzeichnet, dass** die Elektroden (12) von dem Bauteilträger (10) hinterspritzt oder hinterschäumt sind.

3. Formteil (1) nach Anspruch 1, **dadurch gekennzeichnet, dass** die Elektroden (12) auf die Oberfläche des Bauteilträgers (10) haftfest aufgebracht sind.

4. Formteil (1) nach einem der Ansprüche 1 bis 3, **dadurch gekennzeichnet, dass** die Elektroden (12) in entsprechenden Ausnehmungen (100) des Bauteilträgers (10) angeordnet sind.

5. Formteil (1) nach einem der Ansprüche 1 bis 4, **dadurch gekennzeichnet, dass** im Kontaktierungsbereich (110) zwischen Elektroden (12) und Funktionsschicht (11) mindestens eine Befestigungsklammer (13) in die Funktionsschicht (11) und die Elektrode (12) eingebracht ist.

6. Formteil (1) nach Anspruch 5, **dadurch gekennzeichnet, dass**
die Befestigungsklammer (13) aus nichtleitendem oder elektrisch isoliertem Material besteht oder die Befestigungsklammer (13) aus elektrisch leitendem Material gebildet ist, wobei der freiliegende Bereich der Befestigungsklammer (13) elektrisch isoliert ist.

7. Formteil (1) nach einem der Ansprüche 1 bis 6, **dadurch gekennzeichnet, dass** auf der dem Bauteilträger abgewandten Oberfläche der Funktionsschicht (11) ein Decksubstrat (14) aufgebracht ist.

8. Fahrzeugsitzbauteil, Automobilinnenraumteil, Möbelbauteil oder Bauteil eines Sportgeräts mit oder aus einem Formteil (1) gemäß einem der vorangehenden Ansprüche.

## Claims

1. Molded part (1), comprising an electrically conductive functional layer (11), at least two electrodes (12) connected to the electrically conductive functional layer (11) spaced from each other for feeding electrical current into the functional layer (11) and a component carrier (10) made of plastic material to which the functional layer (11) is applied, wherein the electrodes (12) are integrated into the surface of the component carrier (10) adjacent to the functional layer (11) and connected to the functional layer (11) and of the functional layer in a contacting area (110) are electrically contacted,
**characterized by the fact that**
between the component carrier (10) and the functional layer (11) outside the contact areas (110) of the same, a plastic foam layer (15) is provided.

2. Molded part (1) according to claim 1, **characterized in that** the electrodes (12) are back-injected or back-foamed by the component carrier (10).

3. Molded part (1) according to claim 1, **characterized in that** the electrodes (12) are adherently applied to the surface of the component carrier (10).

4. Moulded part (1) according to any one of claims 1 to 3, **characterised in that** the electrodes (12) are inserted into corresponding recesses (100) of the component carrier
(10).

5. Moulded part (1) according to any one of claims 1 to 4, **characterised in that** in the contacting region (110) between electrodes (12) and the functional layer
(11) at least one fastening clamp (13) is inserted into the functional layer (11) and the electrode (12).

6. Moulding (1) according to claim 5, **characterised in that** the fastening clamp (13) is made of non-conductive or electrically insulated material or the fastening clamp (13) is formed of electrically conductive material, wherein the exposed area of the fastening clamp
(13) is electrically insulated.

7. Molded part (1) according to any one of claims 1 to 6, **characterized in that** a covering substrate (14) is applied to the surface of the functional layer (11) facing away from the component carrier.

8. A vehicle seat component, automotive interior part, furniture component or component of a sports equipment having or consisting of a moulded part (1) according to any of the preceding claims.

## Revendications

1. Pièce moulée (1), comprenant une couche fonctionnelle électriquement conductrice (11), au moins deux électrodes (12) connectées à la couche fonctionnelle électriquement conductrice (11) espacées l'une de l'autre pour alimenter le courant électrique dans la couche fonctionnelle (11) et un support de composants (10) en matériau plastique auquel la couche fonctionnelle (11) est appliquée, où les électrodes (12) sont intégrées à la surface du support de composant (10) adjacente à la couche fonctionnelle (11) et connectées à la couche fonctionnelle (11) et de la couche fonctionnelle dans une zone de contact (110) sont contactées électriquement,
**caractérisée par le fait que**
entre le support du composant (10) et la couche fonctionnelle (11) en dehors des zones de contact (110) de la même pièce, une couche de mousse plastique (15) est fournie.

2. Pièce moulée (1) selon la revendication 1, **caractérisée par le fait que** les électrodes (12) sont rétro-injectées ou rétro-écumées par le support du composant (10).

3. Pièce moulée (1) selon la revendication 1, **caractérisée par le fait que** les électrodes (12) sont appliquées de manière adhésive à la surface du support du composant (10).

4. Pièce moulée (1) selon l'une des revendications 1 à 3, **caractérisée par le fait que** les électrodes (12) sont insérées dans les creux correspondants (100) du support du composant (10).

5. Partie moulée (1) selon l'une des revendications 1 à 4, **caractérisée par** celle de la région de contact (110) entre les électrodes (12) et la couche fonctionnelle
(11) au moins une collette de fixation (13) est insérée dans la couche fonctionnelle (11) et l'électrode (12).

6. Moulage (1) selon la revendication 5, **caractérisé par le fait que** la serre de fixation (13) est faite d'un matériau non conducteur ou électriquement isolé ou que la pince de fixation (13) est faite d'un matériau électriquement conducteur, où la zone exposée de la pince de fixation est
(13) est isolé électriquement.

7. Pièce moulée (1) selon l'une des revendications 1 à 6, **caractérisée par le fait qu'**un substrat de revêtement (14) est appliqué à la surface de la couche fonctionnelle (11) tournée en arrière-plan du support du composant.

8. Un composant de siège de véhicule, une pièce intérieure automobile, un élément de mobilier ou un composant d'un équipement sportif ayant ou constitué d'une pièce moulée (1) selon l'une des revendications précédentes.
